Europäisches Patentamt

European Patent Office

Office européen des brevets

(11) Publication number: **0 510 234 A1**

# EUROPEAN PATENT APPLICATION

(21) Application number: **91106816.1**

(22) Date of filing: **26.04.91**

(51) Int. Cl.5: **G09F 3/04, B29C 49/24**

(43) Date of publication of application:
**28.10.92 Bulletin 92/44**

(84) Designated Contracting States:
**CH DE FR GB IT LI**

(71) Applicant: **Toppan Printing Co., Ltd.**
**5-1, 1-chome, Taito**
**Taito-ku Tokyo(JP)**

(72) Inventor: **Yaku, Masaki**
**c/o Toppan Printing Co., Ltd., 5-1, Taitou**
**1-Chome**
**Taitou-Ku, Tokyo 110(JP)**
Inventor: **Kageyama, Koji**
**c/o Toppan Printing Co., Ltd., 5-1, Taitou**
**1-Chome**
**Taitou-Ku, Tokyo 110(JP)**

(74) Representative: **Tiedtke, Harro, Dipl.-Ing. et al**
**Patentanwaltsbüro Tiedtke-Bühling-Kinne-**
**Grupe-Pellmann-Grams Bavariaring 4**
**Postfach 20 24 03**
**W-8000 München 2(DE)**

(54) An in-mold label for biaxial plastic orientation and a plastic container attached a label.

(57) An in-mold label (1) attached on the side wall of a container made by biaxial plastic orientation of a preheated preform (11). The in-mold label (1) is applied on the surface (10a) of the cavity of the mold before the biaxial orientation. The in-mold label (1) has a base sheet; adhesive layer which is deposited on the under side of the base sheet and attachable to the said side wall; and protective coat consisting of thermosetting resin on the upper side of the said base sheet. The stiffness value against bending moment caused by drawing power of the bulging preform (11) in cavity is higher than 85 mgf represented by JIS. According to this in-mold label (1), the label of a container is not folded and/or is not scratched.

FIG.5

## BACKGROUND AND SUMMARY OF THE INVENTION

This invention relates to an in-mold label to be attached at a same time of biaxial orientation of a container and a container with this label.

Recently, a container attached a pair of labels of which surface is same height as surface of the side wall of the container is well-known. To create this container, two ways will be usually applied.

One way is called as "Direct blow molding". In this way, a pair of labels are placed on their side wall which perform cylindlical portion of a bottle, and a heated cylindlical parison extruded from a extruder is applied between a pair of opening molds. After cutting and holding the parison by closing the molds, compressed air is blown by air nozzle into the upper potion of the cylindrical parison. When this parison bulges in the cavity of the molds, the bulging direction is orthogonal to the blewing direction of compressed air.

Another way is called as "biaxial orientation". In this way, a preform preheated by a heating unit is applied between the opening molds in which a pair of labels are placed on the both side wall of the molds like as the aforesaid "Direct blow molding". After holding the upper potion of this preform by closing of these molds, conpressed air is blown into the preform. Since the under side of this preform can not reach the bottom wall of the cavity of the molds, the preform bulges for two direction. In the first step, the preform bulges to the each side wall attached an in-mold label. In the second step, the preform is drawn to the bottom wall of the cavity by a drawing rod inserted into the cylindrical preform. Acording to these steps, especially to the first step, a pair of the labels are attached to the each side wall of the container.

To produce a low price container which has a beatifull surface and a clear finished wall,it is more desirable to take a way of "Biaxial Orientation" of a preheated preform set in a pair of mold.

However,since the labels are firstly pressed to the side wall and secondely drawn to the bottom wall of the cavity by a bulging preform in the biaxial orientation, some of the attached labels are occasionaly broken or folded.

Moreover, since the conventional labels printed many colours lose the stiffness beause of passing throgh many impression cylinders and plate cylinders, these conventional labels are apt to be broken or to be folded in the biaxial orientation.

This invention intends to produce an in-mold label which is not easily folded and/or not broken by a bulging preform at biaxial orientation and a container which has no folded or no scratched label.

## BRIEF DESCRIPTION OF THE DRAWINGS

FIG.1 shows a sectional view of an in-mold label produced in second enbodiment of the present invention.

FIG.2 is an explanatory drawing for drawing power interacting to a attached label by a bulging preform..

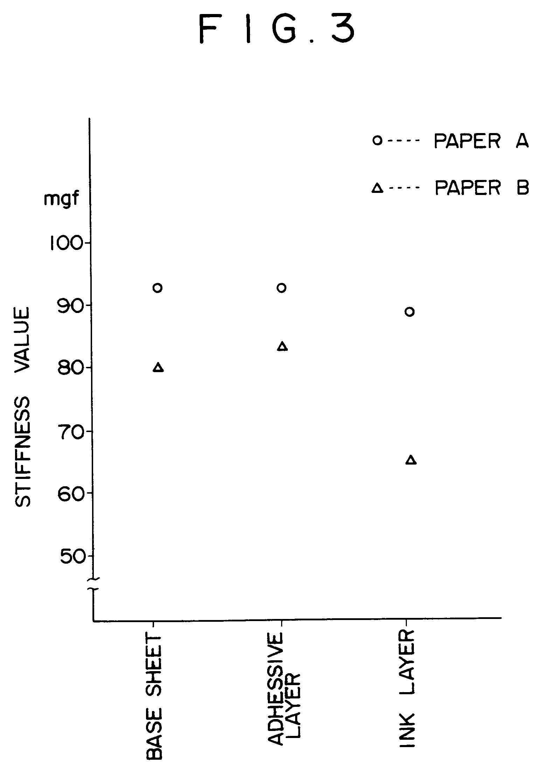

FIG.3 shows a expranatory graph of difference of stiffness value caused by deposited layer material.

FIG.4 is an explanatory drawing of inserting a preform between a pair of molds.

FIG.5 is an explanatory drawing of a bulging preform in closed molds by biaxial orientation.

## DETALED DESCRIPTION

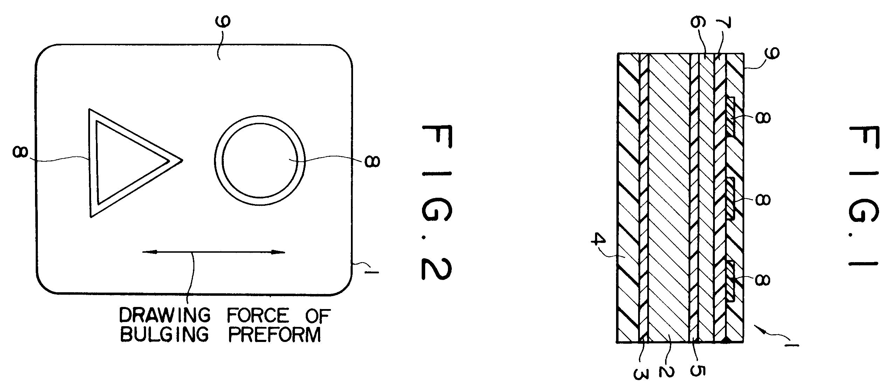

As a more desirable enbodiment , Fig.1 shows an in-mold label 1 comprising a base sheet 2, a varnish layer 3, adhesive layer 4, anchor layer 5 for vapour deposition of alminium layer 6, coating layer 7 for ink layer 8, and protective coat 9.

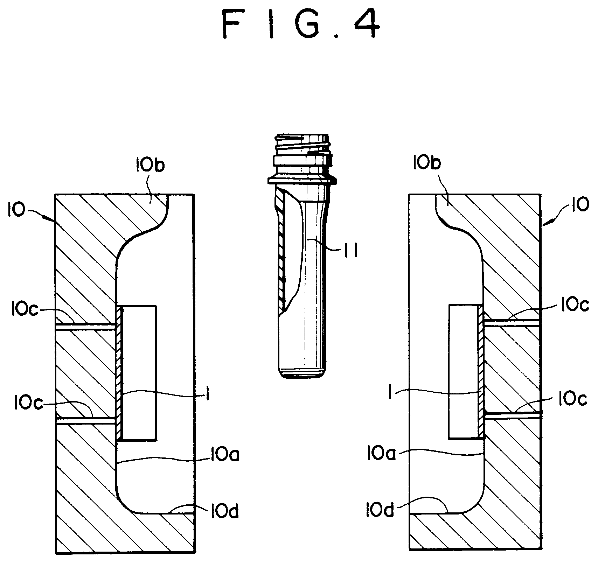

FIG.4 shows a pair of labels 1 are attached to the side wall 10a,10a of the mold 10,10. The side wall 10a,10a perform the cilindlical wall of a bottle and have a pair of suction pores 10c,10c to hold the attached label 1. The preheated preform 11 is applied between the opened mold 10,10. The preheated preform 11 is held by upper portion 10b,10b of mold 10,10. After supporting the preform 11, compressed air is blown into the preform 11 and the preform 11 bulges in the molds 10,10.

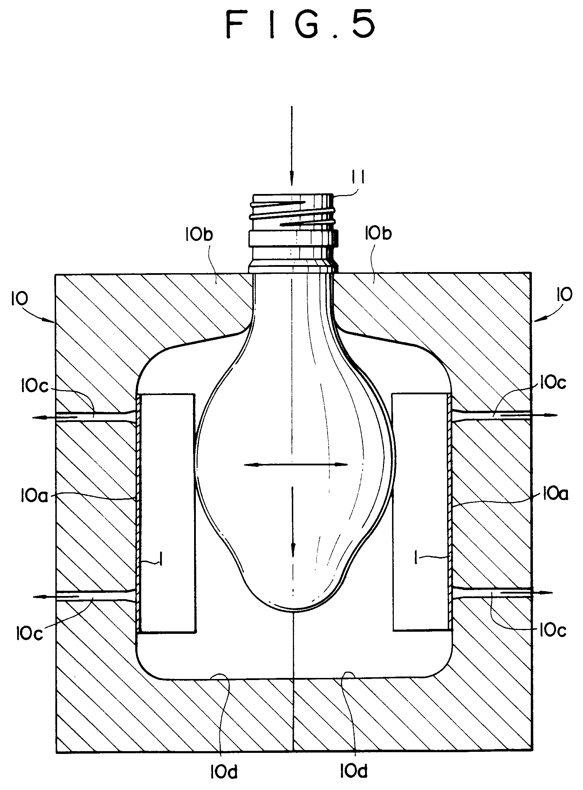

FIG.5 is showing the biaxial orientation of the preform 11. The preform 11 bulges firstly for the side wall 10a,10a and secondly for the bottom wall 10d,10d. Acordingly, each label 1 is drawn to the bottom wall 10d of the mold 10 after the bulging preform 11 attaching to the labels 1,1 on the side wall 10a,10a.

The label 1 has bearable stiffness against the drawing power of bulging preform 11 to the bottom wall 10d,10d. The stiffness value of the label 1 against to the drawing power of bulging preform 11 is set to be higer than 85 mgf.

This stiffness is determined by JIS P 8125. Acording to JIS P 8125, the width of a test paper is determined from 30 mm to 40mm and its length is determined as 70mm. This test paper is bent to 15 degrees by Bending Machine For Test Piece. The result is represented as value of bending moment (gf/m) after conversion by a below equation. In this equation, A means the converted value ; B means measured value of bending moment and C means the width of a test paper. In this invention the units of milligram is used in place of the units of gram.

$$A(gf/cm) = B(gf/cm)*38.1(mm)/C(mm)$$

In addition, the stiffness of the label 1 is able to be higher than 85 mgf by changing material of overcoat layer 9 to thermosetting resin. The thickness of this base sheet 2 is 80g/m².

The label 1 should be able to maintain normal state at least in 5 minutes even if 2 % sodium hydroxide "NaOH" warter is dropped on. And the alminium layer can not be attacked for one manth by air which contains 90 % relative humidity "RH" and is warmed to 40° c.

The ink layer 8 and protective coat 9 should not be peeled by 100 times sliding friction under 1 Kg loading or by rapidly peeling a adhesive tape attached on protective coat, and not be discolored and/or faded by 50 hours lighting as strong as daylight or by dipping 50 hours. The ink layer 8 and protective coat 9 should not have any pinhole.

To produce a sheet of this label 1, firstly vanish layer 3 is applied on base sheet 2 to smooth underside of the base sheet 2 and anchor coat 5 is secondly performed on upperside of the base sheet 2 to enable to deposite alminium layer 6. After vacuum metalising of alminium layer 6, coating layer 7 is applied on alminium layer 6 for ink layer 8 and adhesive layer 4 is laid on vanish layer 3. After printing on coating layer 7 by ink layer 8, protective coat 9 is performed on ink layer 8 and coating layer 7.

The labels 1 are shaped by pressing on this sheet. In case of printing some colours on coating layer 7, base sheet 2 loses the predetermined stiffness by passing through many plating cylinders and inpression cylinderts. Therefore, it is desirable to select a paper consisting of resin coated fibers as a base sheet 2.

For example, inventers tested stiffness of 2 types of paper A and B after gravure printing. The stiffness value of these paper A,B before gravure printing are 93 mgf and 80 mgf.

These paper A,B are applied vanish coat on under side thereof.

The vanish coat is made of "AD1790-15" presented by "Toyo Morton K.K "in japan and its value of the thickness is 2.0/m².

After taking some pair of labels 1 from these paper A,B comprising the aforesaid layers, one pair of labels of paper A were attached to the side wall 10a,10a of one pair of the molds 10,10 and another pair of labels of paper B were attached to the side wall 10a,10a of another pair of the mold 10,10 (not shown).

After applying a preform 11 of polyethylentelephtalate (PET) in these opened molds 10,10, both molds 10,10 were closed and biaxial orientation was operated.

In this test of 50 labels 1, no label 1 made of paper having 93 mgf stiffness value was broken and folded.

In comparison with this label 1 of paper A, 19 labels of 50 labels were broken and folded. Some labels folded to the direction pararell to preform 11, the other labels folded to the direction orthogonal to preform 11. And some of these folded and/or broken labels did not attached to the container made from preform 11.

Second tested labels 1 were made of 2 kind of papers. These paper were applied protective coat 9 consisted of thermosetting resin. The ink layer 8 was applied by gravure printing on coating layer 7. These labels had vanish layer 3 and adhhesive layer 4 on the under side of base sheet 2.

The thermosetting resin were " UR627A/UR628 = 1/1" produced by "Toyo Ink Seizo K.K" in Japan. The stiffness value of a paper C was 110 mgf. The stiffness value of another paper D was 95 mgf.

Acording to aforesaid biaxial orientation with use of these labels 1, there was no labels folded or broken.

Furthermore, inventers tested third labels 1 made of papers E,F which had ink layer 8 and protective coat 9. These papers were made of "YUPO FRG # 110" produced by "Ohji Yuka K.K". The stiffness value of these papers were also 113 mgf.

Acording to the aforesaid biaxial orientation with use of third labels 1, no labels was folded or broken.

Additionally, the stiffness value of abovementioned labels 1 were tested by Gurley flexible measuring machine.

Acording to above mentioned inventions, the labels attached on a container can not be broken and folded even if a container is molded by biaxial orientation, and the prodcted container have smooth and nondefective surface.

Moreover, many containers will be produced in more short time than prior art in which the labels are attached after molding of the containers by label attacing machine.

An in-mold label attached on the side wall of a container made by biaxial plastic orientation of a preheated preform. The in-mold label is applied on the surface of the cavity of the mold before the biaxial orientation. The in-mold label has a base sheet; adhesive layer which is deposited on the under side of the base sheet and attachable to the said side wall; and protective coat consisting of thermosetting resin on the upper side of the said base sheet. The stiffness value against bending moment caused by drawing power of the bulging preform in cavity is higher than 85 mgf represented by JIS. According to this in-mold label, the label of a container is not folded and/or is not scratched.

## Claims

1. An in-mold label attached on the side wall of a plastic container made by biaxial orientation of a preform comprising ; a base sheet; adhesive layer deposited on the under side of the base sheet and attachable to the said side wall; and protective coat consisting of thermosetting resin on the upper side of the said base sheet, and its stiffness value against bending moment caused by the drawing power of bulging preform in cavity is higher than 85 mgf represented by JIS.

2. An in-mold label as described in a claimed 1 having protective layer deposited on the ink layer on the upper side of the said base sheet.

3. In an in-mold label as described in claim 1 and 2, the stiffness value of the said base sheet is set to higher than 88 mgf.

4. In an in-mold label as described in claim 1 or 3, the quantitiy for deposition of adhesive layer is from 1.5 $g/m^2$ to 4.0 $g/m^2$.

5. An in-mold label as described in claim 2, the protective coat consists of thermosetting resin.

6. A container attached one of the said labels in claim 1 to 4 at a time of the said biaxial orientation.

# FIG. 1

# FIG. 2

DRAWING FORCE OF BULGING PREFORM

# F I G . 3

F I G . 4

# F I G . 5

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | EP-A-0 254 365 (PROCTER & GAMBLE)<br>* column 3, line 26 - column 4, line 11 *<br>--- | 1,3,6 | G09F3/04<br>B29C49/24 |
| A | US-A-4 729 864 (CHANG ET AL.)<br>* column 2, line 15 - line 25 *<br>--- | 1,3,6 | |
| A | EP-A-0 273 623 (OWENS-ILLINOIS PLASTIC PRODUCTS)<br>* column 2, line 36 - line 50 *<br><br>----- | 1,3 | |
| | | | TECHNICAL FIELDS SEARCHED (Int. Cl.5 )<br><br>G09F<br>B29C |

The present search report has been drawn up for all claims

| Place of search | Date of completion of the search | Examiner |
|---|---|---|
| THE HAGUE | 04 DECEMBER 1991 | POTTIEZ M. |

EPO FORM 1503 03.82 (P0401)